# DEMANDE DE BREVET EUROPEEN

(11) **EP 4 653 400 A1**
(43) Date de publication de la demande: **26.11.2025**
(21) Numéro de dépôt: 25171280.8
(22) Date de dépôt: 17.04.2025
(51) Int. Cl.: C03B 5/235, C03B 5/24, F27B 3/20

(54) **PROCÉDÉ DE FUSION À MULTIPLE FLAMMES IMPACTANTES**

(30) Priorité: 23.05.2024 FR 2405259
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: BARIKI, Chaimae, 78350 Jouy-En-Josas (FR); TSIAVA, Rémi, 78350 Jouy-En-Josas (FR)
(74) Mandataire: Air Liquide

(57) **Abrégé**

Procédé de fusion dans lequel les infondus forment un tas 30 présentant une surface libre 40 inclinée par rapport à la verticale dans le four 10; lesdits infondus sont chauffés au moyen de flammes 51, 52, 53 à puissance et impulsion régulées et dirigées vers la surface libre 40 suivant au moins deux directions α1, α2, α3 formant des angles aigus θ1, θ2, θ3 différents avec le plan horizontal de manière à ce que les les flammes 51, 52, 53 définissent des zones d'impact 41, 42, 43 sur la surface libre 40 qui se situent à au moins deux niveaux verticaux h1, h2, h3 différents.

## Description

La présente invention concerne les procédés et les fours de fusion.

Il est connu dans des procédés de fusion d'introduire la charge non encore fondue (charge solide), ci-après les « infondus », dans le four par des enfourneuses (en anglais: "chargers").

En attendant leur fusion, les infondus forment alors un talus (en anglais "bank") ou une ou des piles (en anglais "piles") d'infondus (solides) dans le four.

Par exemple, dans le cas de certains fours de fusion de verre connus, ces infondus flottent sur le bain de matières premières déjà fondues comme un tapis et se disloquent en plusieurs petits îlots au fur et à mesure qu'ils avancent dans le four avant leur fusion totale.

Il est connu dans des procédés de fusion, d'introduire la charge non encore fondue, dans le four par des enfourneuses. Les infondus forment alors un talus ou une ou des piles d'infondus dans le four.

Selon le mode d'enfournement utilisé, les infondus peuvent s'accumuler dans le four sous forme d'un ou plusieurs talus d'une hauteur plus ou moins importante, pouvant même atteindre la voûte du four et de largeur pouvant être égale à la largeur du four, voire sous forme d'une ou plusieurs piles d'une telle hauteur.

Dans tous les cas, le dépôt d'infondus présente une surface libre globalement inclinée par rapport à la verticale.

Dans ce qui suit, le terme « tas » est utilisé pour désigner de tels dépôts d'infondus de toute forme, donc à la fois les dépôts d'infondus en forme de talus et les dépôts d'infondus en forme de pile.

Il est connu de diriger des flammes vers des tas d'infondus pour provoquer la fusion des infondus.

Chauffer la surface libre inclinée d'un tas avec une seule flamme pour obtenir une fusion contrôlée et/ou plus ou moins uniforme sur la surface libre dirigée vers la flamme est un défi, en particulier quand les infondus ont une conductivité thermique faible.

En effet, la distribution de l'énergie conférée aux infondus dépend de la géométrie de la flamme et de son orientation vers la surface cible. Par exemple, dans le cas d'une flamme horizontale à section transversale circulaire impactant la surface libre d'un talus d'infondus, la surface libre n'est pas perpendiculaire à la flamme et l'intersection de la flamme avec la surface cible est inclinée vers l'arrière, conduisant à une distribution de l'énergie en défaveur des parties de la surface cible plus éloignées du brûleur et les parties non-impactées par la flamme.

Il en résulte une hétérogénéité de chauffe et un déséquilibre dans la fusion du tas : la zone qui reçoit le plus d'énergie va fondre en priorité laissant un creux dans le tas à la place. Les zones du tas recevant moins d'énergie seront en retard de fusion, et peuvent, par exemple, dans un four continu, avancer avec la charge fondue en direction de la sortie du four.

L'hétérogénéité de chauffe impose ainsi au conducteur de four de ralentir le chargement de matières premières afin d'assurer la fusion complète, et le cas échéant l'affinage de la charge fondue dans le four, ce qui se traduit par une baisse de production.

Ce problème est particulièrement prononcé dans le cas des infondus avec une faible conductivité de chaleur.

La présente invention a pour but de remédier au moins en partie au problème décrit ci-dessus.

A cette fin, l'invention propose un procédé de fusion dans lequel des infondus sont introduits dans un four par une ou plusieurs enfourneuses. Dans le four, ces infondus forment un tas présentant une surface libre inclinée par rapport à la verticale. La superficie de la base du tas est donc plus grande que la superficie du sommet du tas.

Suivant le procédé de fusion, les infondus dans le tas sont chauffés au moyen de flammes dirigées vers ladite surface libre inclinée. Chacune de ces flammes impacte la surface libre du tas et définit ainsi une zone d'impact sur cette surface libre.

Suivant l'invention, ces flammes sont dirigées vers la surface libre suivant au moins deux directions formant des angles aigus différents avec le plan horizontal. De cette manière, les zones d'impact définies par les flammes sur la surface libre se situent à au moins deux niveaux verticaux différents.

Par niveau vertical d'une zone d'impact, on comprend dans le présent contexte la hauteur du centroïde ou centre de masse de cette zone.

Egalement suivant l'invention, l'énergie thermique transférée au tas par chacune de ces flammes dans sa zone d'impact est régulée en régulant la puissance de la flamme.

Ce qui plus est, l'impulsion de chacune de ces flammes est régulée de manière à ce que la flamme impacte la surface libre dans sa zone d'impact sans dégradation mécanique par la flamme de l'intégrité structurelle du tas dans cette zone d'impact.

Le procédé suivant l'invention présente plusieurs avantages.

La chauffe par les flammes des infondus dans le tas est distribuée sur la hauteur du tas.

L'énergie thermique transférée à chaque zone d'impact est régulée. Ainsi, il est possible de chauffer certaines zones d'impact plus ou moins que d'autres zones d'impact et ainsi d'optimiser le processus de fusion. Une telle régulation permet également d'éviter de surchauffer les infondus, ce qui est important dans le cas d'infondus pouvant subir une baisse de qualité en cas de surchauffe.

Finalement, la régulation de l'impulsion des flammes assure que chacune des flammes dirigées vers la surface libre du tas atteint, c'est-à-dire impacte effectivement, cette surface libre, mais avec une impulsion telle que la flamme ne dégrade pas mécaniquement l'intégrité structurelle du tas dans sa zone d'impact.

Dans ce contexte, distinction est faite entre, d'une part, la fusion recherchée des infondus dans le tas et son effet sur la forme et la structure du tas et, d'autre part, la dégradation mécanique du tas, notamment par entraînement mécanique d'infondus du tas par les flammes et par les gaz de combustion. Une telle dégradation mécanique peut notamment résulter (i) en la présence d'infondus dans la charge fondue évacuée du four ou en une charge fondue insuffisamment affinée, (ii) en la dégradation de l'intérieur du four par les infondus entraînés et (iii) en la perte d'infondus évacués du four avec les fumées de combustion.

Comme indiqué ci-dessus, les flammes sont dirigées vers la surface libre suivant au moins deux directions formant des angles aigus différents avec le plan horizontal. De cette manière, les zones d'impact définies par les flammes sur la surface libre se situent à au moins deux niveaux verticaux différents. Une telle configuration se distingue donc clairement d'un procédé de combustion dans lequel on génère une multitude de flammes suivant au moins deux directions formant des angles aigus différents avec le plan horizontal, mais dans lequel les flammes fusionnent en une seule flamme en aval du brûleur. En effet, une telle flamme fusionnée définirait une seule zone d'impact sur la surface libre et non pas une multitude de zones d'impact à des niveaux verticaux différents.

Il est à noter que la présente invention n'exclut pas la présence dans le four de moyens de chauffe autre que les flammes dirigées vers la surface libre susmentionnées. De tels autres moyens de chauffe peuvent notamment inclure des éléments de chauffage électrique et/ou des flammes non-dirigées vers la surface libre inclinée du tas, par exemple au-dessus de ou submergées dans la charge fondue dans une zone d'affinage.

Le procédé proposé avec, d'une part, sa régulation de la puissance des flammes impactantes et, d'autre part, sa régulation de l'impulsion des flammes impactantes, permet ainsi de résoudre le déséquilibre de fusion du tas observé dans les procédés connus et par conséquent d'augmenter la production du four. La fusion mieux répartie sur la surface libre du tas dirigée vers les flammes conduira à une optimisation de l'utilisation de l'énergie thermique, une économie d'énergie qui sera d'autant plus importante quand on associe au procédé un système de récupération d'énergie thermique des fumées évacuées du four. L'énergie ainsi récupérée peut avantageusement être utilisée pour chauffer un ou des réactifs de combustion (comburant et/ou combustible) par l'intermédiaire d'un récupérateur et/ou pour préchauffer au moins une fraction des infondus avant leur introduction dans le four.

Comme indiqué ci-dessus, suivant le procédé de l'invention, des flammes sont dirigées vers la surface libre suivant au moins deux directions formant des angles aigus différents avec le plan horizontal de manière à ce que lesdites flammes définissent des zones d'impact sur la surface libre qui se situent à au moins deux niveaux verticaux différents. Suivant une forme de réalisation préférée, les zones d'impact de ces flammes sur la surface libre se situent à au moins trois niveaux verticaux différents, voire à au moins quatre niveaux verticaux différents. Le nombre de niveaux verticaux est choisi en fonction de la hauteur du tas et donc aussi de sa surface libre ainsi que de la taille/forme des zones d'impact. La taille et la forme d'une zone d'impact dépendent de la géométrie de la flamme et de la surface libre impactée, plus particulièrement de la longueur, de la section transversale, définie par le brûleur générant la flamme, et de l'angle d'ouverture de la flamme impactante et de la forme et de l'inclinaison de la surface libre impactée.

Les zones d'impact peuvent être positionnées l'une par rapport à l'autre de manières différentes.

Par exemple, les zones d'impact situées à un niveau vertical donné peuvent être positionnées en décalé par rapport aux zone d'impact situées au niveau vertical en-dessous et/ou situées au niveau vertical au-dessus.

Toutefois, pour la mise en œuvre du procédé, il peut être avantageux que les zones d'impact à au moins deux niveaux verticaux différents aient des centres géométriques qui se trouvent dans un même plan vertical. Une telle configuration peut notamment être réalisée au moyen de flammes dirigées vers la surface libre, dont les directions (a) forment des angles aigus différents avec le plan horizontal et (b) se situent dans ledit même plan vertical. Dans ce cas, il est possible d'utiliser un même brûleur pour générer la multitude de flammes dont les directions se situent dans ce plan.

Comme indiqué ci-dessus, les flammes impactantes forment des angles aigus avec le plan horizontal et chaque flamme impactante définit une zone d'impact sur la surface libre du tas. Ainsi, quand plusieurs telles flammes impactantes présentent des directions situées dans un même plan vertical, lesdites directions seront normalement divergentes l'une par rapport à l'autre dans le sens vers la surface libre du tas afin d'éviter que lesdites flammes se rejoignent et se mélangent, se fusionnant ainsi en une seule flamme avant d'impacter ladite surface libre du tas.

Les zones d'impact de deux flammes adjacentes peuvent se recouvrir partiellement.

Suivant une forme de réalisation préférée et afin d'assurer une bonne distribution de la chauffe et de la fusion de la surface libre impactée, chacune des zones d'impact recouvre partiellement la zone d'impact la plus proche.

Pour une meilleure gestion du procédé de fusion, il peut être utile de détecter la hauteur du tas dans le four. A cette fin, le four peut être muni de moyens pour détecter la hauteur ou le profil du tas dans le four.

Suivant une forme de réalisation utile, on ajuste le nombre de niveaux verticaux différents des zones d'impact en fonction de la hauteur du tas.

Dans ce cas, les flammes correspondant aux zones d'impact avec le niveau vertical le plus haut sont éteint quand la hauteur du tas descend en dessous d'un seuil donné (passant ainsi, par exemple de zones d'impact à trois niveaux verticaux vers les zones d'impact des deux niveaux verticaux inférieurs seulement), et on allume les flammes correspondant à des zones d'impact avec un niveau vertical supérieur quand la hauteur du tas dépasse un seuil donné (passant ainsi, par exemple, de zones d'impact à deux niveaux verticaux vers des zones d'impact à trois niveaux verticaux, le troisième niveau ajouté se situant au-dessus des deux niveaux pré-existants). Les deux seuils peuvent être identiques ou différents.

En effet, la hauteur du tas dans le four peut varier, par exemple en fonction de la production du four (également appelée la « tirée » dans le cas d'un four de fusion continu), en fonction de la nature des infondus introduits dans le four et/ou de la charge fondu à obtenir. Dans le cas d'un four discontinu (souvent appelé « four batch »), ou d'un four semi-continu (souvent appelé « four semi-batch »), la hauteur du tas peut varier au cours de la fusion : la hauteur du tas étant dans ce cas généralement maximale après l'introduction d'un « batch » d'infondus et diminuant au fur et à mesure que la fusion des infondus avance.

Dans le présent contexte, on comprend par un procédé ou un four de fusion semi-continu un procédé ou un four de fusion dans lequel une partie de la charge est ajoutée ou soustraite au cours du cycle de fusion.

Comme indiqué ci-dessus, le four peut être muni de moyens pour détecter la hauteur ou le profil du tas dans le four. La hauteur du tas peut également être vérifié visuellement par l'opérateur du four à travers un regard (en anglais : peephole) du four. La hauteur du tas et/ou l'évolution de cette hauteur pendant le procédé de fusion peut également être estimés sur la base des données historiques.

Quand le tas présente une forme ou une position dans le four telles qu'une ou plusieurs des flammes qui sont généralement dirigées vers le tas passent totalement ou partiellement au-dessus ou à côté du tas, on éteint avantageusement ces flammes qui n'impactent ainsi pas la surface libre du tas, voire qui n'impactent que partiellement la surface libre du tas.

En éteignant les flammes dirigées généralement vers la surface libre mais passent au moins partiellement au-dessus ou à côté du tas d'infondus, l'efficacité du four est augmentée et il n'y a plus de risque qu'une telle flamme impacte et surchauffe par exemple la paroi ou une enfourneuse du four situées derrière le tas dans la direction de la flamme.

Quand le tas présente une forme ou une position dans le four telles qu'une partie de la surface libre n'est pas impactée par une flamme, alors que le four comporte des moyens (tel qu'un brûleur) pour diriger une flamme impactante vers cette partie de la surface libre, on ajoute/allume avantageusement une ou des flammes telles que définies ci-dessus qui impactent cette partie de la surface libre du tas. Par exemple, en ajoutant une ou des flammes avec un niveau de zone d'impact plus proche du sommet du tas quand la hauteur du tas augmente, la distribution de la chauffe des infondus est mieux répartie sur la surface libre du tas.

Il peut également être utile de détecter une position de la surface libre du tas dans le four. Il peut notamment être utile de détecter des positions de la surface libre à au moins un des niveaux verticaux des zones d'impact définit par les flammes dirigées vers cette surface libre.

Une position de la surface libre permet, par exemple, d'identifier l'état d'avancement ou de retrait du tas dans un four de fusion continu par rapport à la sortie pour la charge fondue du four, un tas trop avancé vers la sortie du four augmentant le risque de la présence d'infondus dans la charge fondue évacuée et/ou d'un affinage incomplet de la charge fondue en amont de cette sortie.

Suivant une forme de réalisation avantageuse, on détecte si le tas atteint une distance d'avancement prédéfinie dans la direction d'au moins une des flammes dirigées vers la surface libre. Cette distance d'avancement prédéfinie correspond à un avancement de la surface libre et donc du front de fusion du tas par rapport à sa position recherchée. Quand le tas atteint cette distance d'avancement prédéfinie on augmente la puissance globale des flammes dirigées vers la surface libre. De cette manière, il est possible de provoquer une fusion plus rapide des infondus dans le tas et ainsi un recul de la surface libre vers sa position recherchée.

Suivant une autre forme de réalisation, qui peut être combinée avec la forme de réalisation précédentes, ou pas, on détecte la présence du tas à une distance de recul prédéfinie dans la direction d'au moins une des flammes dirigées vers la surface libre. Cette distance de recul prédéfinie correspond à un retrait de la surface libre et donc du front de fusion du tas par rapport à sa position recherchée. Quand le tas n'atteint pas cette distance de recul prédéfinie, on réduit la puissance globale des flammes. De cette manière, il est possible de ralentir la fusion des infondus dans le tas et à terme, notamment avec l'introduction d'infondus additionnels dans le four, d'amener la surface libre vers sa position recherchée.

Comme déjà indiqué ci-dessus, suivant la présente invention, l'impulsion de chaque flamme dirigée vers la surface libre est régulée de manière à ce que la flamme impacte la surface libre sans dégradation mécanique par la flamme de l'intégrité structurelle du tas dans la zone d'impact de la flamme. Par conséquent, quand la position de la surface libre du tas ne correspond pas ou plus à sa position recherchée, un ajustement de l'impulsion de ces flammes peut également être nécessaire afin d'assurer que les flammes impactent la surface libre à sa position réelle et/ou afin d'éviter une dégradation mécanique par la flamme de l'intégrité structurelle du tas dans la zone d'impact de la flamme sur la surface libre à sa position réelle.

Le tas peut être en forme d'un talus. Un tel tas peut notamment être obtenu quand les infondus sont introduits dans un four continu à travers ou de part et autre de la paroi amont du four et la charge fondue est évacuée du four à travers la paroi aval du four, le four étant muni d'un ou plusieurs brûleurs situés du côté de la paroi aval et dont la ou les flammes sont dirigées vers un front de fusion du talus formant une surface libre inclinée par rapport à la verticale vers la paroi amont.

Le tas peut également être en forme d'une pile, telle qu'une pile en substance conique ou tronconique. Un tel tas peut notamment être obtenu quand les infondus sont introduits dans le four à travers la voûte du four.

Les infondus peuvent également former plusieurs piles dans le four, chaque pile présentant une surface libre. Dans ce cas, le procédé suivant l'invention est utilisé pour fondre les infondus dans chaque pile.

Les flammes impactantes résultent de la combustion d'un combustible avec un comburant (i.e. un oxydant de combustion).

Le combustible peut être un combustible solide, liquide ou gazeux.

Le combustible est avantageusement un combustible gazeux. Un tel combustible gazeux peut être un combustible carboné, un combustible non-carboné ou un mélange de combustible carboné et de combustible non-carboné. Ainsi, le combustible peut en particulier être choisi parmi les combustibles gazeux suivants : gaz naturel, hydrogène, ammoniac, gaz de synthèse, biogaz, tout gaz contenant de l'hydrogène et/ou du monoxyde de carbone, et les combinaisons d'au moins deux de ces combustibles gazeux.

Pour des raisons environnementales, les combustibles non-carbonés et les combustibles renouvelables à faible empreinte carbone.

Le comburant/oxydant présente typiquement une teneur en oxygène de 16% à 100% en volume. Les comburants/oxydants plus riches en oxygène, par exemple avec une teneur en oxygène d'au moins 90% en volume, sont typiquement plus efficaces et permettent de réaliser des flammes plus chaudes, étant donné leur faible teneur, voire l'absence, de gaz ballast qui ne participe pas à la combustion. Toutefois, pour certaines applications, un comburant/oxydant ave une teneur en ballast plus élevée, générant typiquement des flammes plus diluées, peut être préférable.

Afin de générer les flammes dirigées vers la surface libre du tas d'infondus, le four est équipé d'au moins un brûleur.

Suivant une forme de réalisation utile, le four est équipé d'au moins un brûleur qui génère une multitude des flammes dirigées vers la surface libre. Suivant une forme de réalisation utile, le four est équipé de plusieurs brûleurs générant chacun une seule flamme dirigée vers la surface libre. Un brûleur du four peut ainsi générer une seule flamme impactante ou plusieurs flammes impactantes. Le four peut également être équipé d'une combinaison de brûleurs, dont au moins un génère une seule flamme et au moins un autre génère plusieurs flammes.

Suivant une forme de réalisation avantageuse, le four est équipé d'au moins un brûleur qui génère des flammes, c'est-à-dire plusieurs flammes, dirigées vers la surface libre du tas selon au moins deux directions formant des angles aigus différents avec le plan horizontal de manière à ce que les zones d'impact définies par ces flammes générées par ce brûleur sur la surface libre se situent à au moins deux niveaux verticaux différents.

Suivant une forme de réalisation préférée, le four est équipé d'au moins un brûleur qui génère au moins deux flammes dirigées vers la surface libre et dont les directions
(a) forment des angles aigus différents avec le plan horizontal,
(b) se situent dans ledit même plan vertical et
(c) sont divergente l'une par rapport à l'autre dans le sens vers le tas/vers la surface libre du tas.

Pour la mise en œuvre du procédé, le four de fusion est généralement équipé :
- d'une ou plusieurs enfourneuses pour introduire les infondus dans le four ;
- d'un ou plusieurs dispositifs de combustion, et notamment un ou plusieurs brûleurs, pour générer les flammes dirigées vers la surface libre ;

- d'une unité de régulation permettant :
   ∘ de réguler la puissance des flammes et
   ∘ de réguler l'impulsion des flammes.

Pour la mise en œuvre de formes de réalisation particulières du procédé suivant l'invention, le four peut également être équipé d'un ou plusieurs des équipements suivants :
- un détecteur pour détecter la hauteur ou le profil du tas ;
- un détecteur pour détecter une position de la surface libre, de préférence pour détecter une position de la surface libre à au moins un des niveaux verticaux des zones d'impact ;
- un détecteur pour détecter si le tas atteint une distance d'avancement prédéfinie ou pas ;
- un détecteur pour détecter la présence ou l'absence du tas à une distance de recul prédéfinie.

Il est à noter qu'un même détecteur peut être utilisé pour plusieurs détections. Il est par exemple possible d'utiliser un détecteur détectant la forme et la position d'un tas en forme de pile ou un détecteur détectant la forme et la position du front de fusion d'un tas en forme de talus.

Quand le four est équipé d'un ou plusieurs détecteurs, le four comporte avantageusement également une unité de contrôle pour contrôler l'unité de régulation en utilisant des données détectées par le ou les détecteurs, par exemple suivant l'une quelconque des formes de réalisations décrites ci-dessus concernant la régulation de la puissance et de l'impulsion des flammes impactantes.

Comme indiqué ci-dessus, le procédé peut être un procédé continu, donc avec un four de fusion continu, un procédé discontinu, donc avec un four de fusion discontinu ou un procédé semi-continu, c'est-à-dire avec un four semi-continu.

Dans le cas d'un procédé discontinu ou semi-continu, le procédé de fusion peut également comporter une étape pendant laquelle le tas est en substance ou totalement fondus et pendant laquelle il n'y a pas de surface libre inclinées sur laquelle des flammes définissent des zone d'impact à au moins deux niveaux verticaux. Selon le cas, il peut ne pas y avoir de la combustion dans le four pendant cette étape (en particulier quand cette étape est courte et/ou les pertes thermiques du four sont faibles) ou un certain niveau de combustion (généralement plus faible) est maintenu afin d'affiner la charge fondue ou de la maintenir à la température **requise** au-dessus de la température de fusion de la charge.

Suivant des formes de réalisation particulières, le procédé est un procédé continu ou semi-continu, le four présentant une paroi amont, à travers de laquelle ou du côté de laquelle les infondus sont introduits dans le four, et une paroi aval à l'opposé de la paroi amont, à travers de laquelle ou du côté de laquelle la charge fondue est évacuée du four.

Suivant une forme de réalisation particulière, les flammes impactantes sont dirigées vers la surface libre du tas à travers la paroi aval ou du côté de la paroi aval, par exemple à travers la voûte et/ou à travers les ou un des parois latérales reliant la paroi amont à la paroi aval.

Dans le présent contexte, on comprend par « du côté d'une paroi » : dans la moitié de la longueur du four adjacente à ladite paroi, de préférence dans le tiers, voire dans le quart ou dans le cinquième, de la longueur du four adjacent(e) à ladite paroi.

Le procédé suivant l'invention est de préférence un procédé pour la fusion de verre, un procédé pour la fusion d'émail, un procédé pour la fusion de métal non-ferreux, comme l'aluminium, le plomb, le cuivre, etc., et en particulier un tel procédé pour la seconde fusion de métal non-ferreux, plus particulièrement dans le contexte d'un recyclage d'un ou plusieurs métaux non-ferreux, pour la fusion de liant hydraulique ou pour la vitrification de déchets. Par conséquent, le four est de préférence un four choisi parmi les fours de fusion de verre, les fours de fusion d'émail, les fours de fusion de métal non-ferreux, les fours de fusion d'un liant hydraulique et les fours de vitrification de déchets.

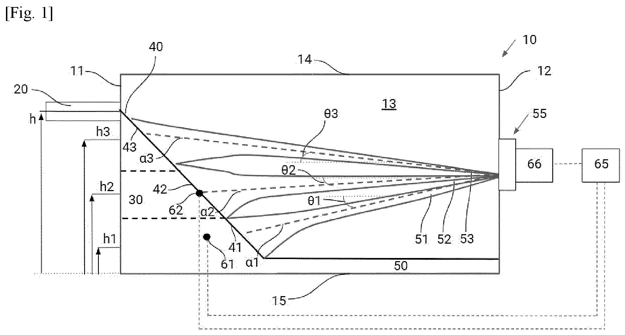

La présente invention et ses avantages seront mieux compris à la lumière de l'exemple non-limitatif ci-après, référence étant faite à la figure 1 qui est une représentation schématique, en coupe transversale, d'un four dans lequel le procédé suivant l'invention est mise en œuvre.

La figure 1 montre plus particulièrement un four continu 10 pour la fusion de verre.

Les fours du type illustré sont de forme parallélépipédique et ont généralement une longueur inférieure à 10 mètres, une largeur inférieure à 5 mètres et une hauteur inférieure à 3 mètres.

Le four 10 présente une paroi amont 11, à travers de laquelle les infondus (c'est-à-dire la composition vitrifiable solide) sont introduits dans le four 10, et une paroi aval 12 à l'opposé de la paroi amont 11 et à travers de laquelle le verre fondu 50 est évacué du four 10.

Deux parois latérales relient la paroi amont 11 et la paroi aval 12, la paroi latérale arrière 13 étant visible sur la figure 1.

Le four 10 présente également une voûte 14 et une sole 15, la zone de fusion se situant entre la paroi amont 11, la paroi aval 12, la paroi latérale 13 et l'autre paroi latérale, la voûte 14 et la sole 15.

La composition vitrifiable solide est composée de ou comporte des particules de petites tailles à faible conductivité thermique en comparaison avec la conductivité thermique des métaux. Ces particules ne transmettent donc pas ou peu d'énergie thermique entre elles.

Les infondus sont introduits dans le four 10 à travers la paroi amont 11, par exemple au moyen d'une vis sans fin 20. Ils forment, à l'intérieur du four 10, un tas 30 en forme de talus avec une hauteur h (mesurée à partir de la sole 15) qui s'étends au-dessus du verre fondu 50. Du côté amont du four 10, le talus 30 d'infondus s'appuie contre la paroi amont 11. Vers l'aval, le talus 30 se termine en une surface libre 40 inclinée par rapport à la verticale.

Pour la chauffe et la fusion des infondus, la surface libre 40 est attaquée à différents niveaux verticaux par les flammes 51, 52, 53 positionnées en éventail et générées par un ou plusieurs brûleurs 55 montés dans la paroi aval 12. La surface libre 40 forme par conséquent un front de fusion pour les infondus dans le four 10.

Le four 10 illustré dans la figure 1 est un four de petite taille, le talus 30 à fondre se trouve du côté de la paroi amont 11 et le ou les brûleurs 55 sur la paroi aval 12 opposée. Le ou les brûleurs 55 sont choisis pour émettre une longueur de flamme en adéquation avec la longueur du four 10. La matière fondue 50 se déplace sur la sole 15 du four 10 dans la direction du brûleur 55 en dessous duquel se trouve un trou de sortie (non-illustré) de la matière fondue 50. La matière fondue 50 se déplace de ce fait, sous les flammes 51, 52, 53 qui la maintiennent fondue jusqu'à sa sortie du four 10.

Pour les fours de plus grande taille, le talus 30 à fondre reste du côté de la paroi amont 11, mais des brûleurs additionnels sont ajoutés. Ces brûleurs additionnels peuvent, par exemple, être installés sur les parois latérales 13 reliant la paroi amont 11 et la paroi aval 12, en voute 14 ou dans la sole 15, pour des brûleurs dits « brûleurs submergés ».

Chaque flamme 51, 52, 53 définit une zone d'impact 41, 42, 43 sur la surface libre 40 et y provoque la fusion des infondus.

Les flammes 51, 52, 53 sont dirigées vers la surface libre 40 suivant des directions différentes α1, α2, α3 (représentées par les axes des flammes 51, 52, 53) formant des angles aigus θ1, θ2, θ3 différents avec le plan horizontal. De cette manière, les zones d'impact 41, 42, 43 respectives des flammes 51, 52, 53 se situent à des niveaux verticaux h1, h2, h3 (tels que définis ci-dessus) différents de la surface libre 40.

L'énergie thermique transférée aux infondus dans le talus 30 par chaque flamme 51, 52, 53 via sa zone d'impact respective 41, 42, 43 est régulée en régulant la puissance de la flamme correspondante 51, 52, 53. En régulant la puissance des flammes 51, 52, 53, on régule également la vitesse de fusion des infondus au niveau de la zone d'impact correspondante 41, 42, 43. Cela permet notamment d'éviter une déstabilisation et donc dégradation mécanique du talus 30 par une fusion trop rapide des infondus à la base du talus 30, voire par une fusion trop lente des infondus au milieu ou au sommet du talus 30.

En régulant la puissance globale des flammes 51, 52, 53 et donc également l'énergie thermique transférée aux infondus dans le talus 30 par l'ensemble des flammes 51, 52, 53 via les différentes zones d'impact 41, 42, 43, il est possible d'ajuster la vitesse globale de fusion des infondus et par conséquent également la hauteur h du talus 30 et/ou la position d'avancement dans le four de la surface libre 40 du talus 30.

L'impulsion de chaque flamme 51, 52, 53 est également régulée. Cette impulsion est plus particulièrement régulée de manière à ce que les flammes 51, 52, 53, d'une part, impactent la surface libre 40 du talus 30, ce qui permet un chauffage plus efficace des infondus, et, d'autre part, ne dégradent pas mécaniquement l'intégrité structurelle du talus 30.

Etant donné que l'impulsion des flammes 51, 52, 53 est régulée de manière à ce que lesdites flammes 51, 52, 53 impactent la surface libre 40, les flammes qui correspondent à des zones d'impact les plus éloignées de la racine de la flamme/du brûleur 55 ont typiquement des impulsions plus fortes que les flammes qui correspondent à des zones d'impact plus proches de la racine de la flamme/du brûleur 55.

Comme indiqué précédemment, dans le présent contexte, distinction est faite entre, d'une part, le changement du tas par la fusion des infondus et, d'autre part, la dégradation mécanique de l'intégrité structurelle du tas par des flammes à impulsion élevée, notamment par l'entraînement mécanique non-maîtrisé d'infondus du tas par de telles flammes et/ou par les fumées/gaz de combustion générées par de telles flammes.

Pour la régulation de l'impulsion des flammes 51, 52, 53, compte est donc tenu de la distance entre la surface libre 40 et la racine des flammes 51, 52, 53/la sortie du ou des brûleurs 55 générant les flammes 51, 52, 53 et de la nature des infondus.

Ainsi, quand le talus consiste en des morceaux de métal non-ferreux de taille et de poids importants qui sont difficiles à entraîner, l'impulsion des flammes peut être relativement élevée.

Par contre, quand le talus consiste en ou comporte des infondus en forme de particules légères/de fines/de poudres, comme dans la forme de réalisation illustrée, et en particulier de telles fines/de tels poudres qui ne collent pas ensemble lors de leur entrée dans le four, l'impulsion des flammes impactantes doit rester assez faible afin d'éviter un tel entraînement ou afin d'éviter un entraînement important desdites particules.

Il est rappelé qu'une telle déstabilisation/un tel entraînement peut résulter en :
(i) la présence d'infondus dans la charge fondue évacuée du four ou en une charge fondue insuffisamment affinée, ce qui peut poser des problèmes dans les procédés en aval de l'étape de fusion, tels que le façonnage de produits solide à partir de la charge fondue, et à une réduction de la qualité des produits solides fabriqués ;
(ii) la dégradation de l'intérieur du four, par exemple : érosion des parois par les infondus entraînés et formation de dépôts sur des brûleurs ou d'autres équipements en contact avec l'intérieur du four ; et/ou
(iii)la perte d'infondus évacués du four avec les fumées de combustion. Une telle perte de matières premières est évidemment coûteuse. Elle peut également causer des blocages des conduits pour l'évacuation des fumées et une saturation accélérée des filtres utilisés pour le traitement des fumées en amont de la cheminée. Quand le four comporte un système pour la récupération d'énergie thermique des fumées évacuées, la présence d'infondus dans les fumées pose également des problèmes pour la récupération de chaleur dans les récupérateurs ou régénérateurs utilisés. Ce qui plus est, quand la charge est un mélange de différents ingrédients, comme c'est notamment généralement le cas pour les procédés de fusion de verre, l'évacuation d'infondus avec les fumées de combustion peut être sélective, avec des niveaux d'évacuation différents pour différents ingrédients. Dans ce cas, la composition de la charge fondue obtenue ne correspond pas à celle qui découle de la composition des infondus introduits dans le four, avec des conséquences évidentes pour les procédés de traitement de la charge fondue en aval du four et de sur les propriétés du produit final obtenu.

Des brûleurs permettant une telle double régulation, d'une part, de la puissance de la ou des flammes générées et, d'autre part, de l'impulsion de la ou des flammes générées sont connus. De tels brûleurs sont par exemple décrit dans WO-A-2010/003866. Un tel brûleur permet, par exemple, de modifier la puissance de la flamme à impulsion constante ou de modifier l'impulsion de la flamme à puissance constante.

Les flammes 51, 52, 53, voire en particulier la flamme 53 correspondant à la zone d'impact 43 du niveau vertical h3 le plus élevé, peuvent être éteintes individuellement, notamment en fonction de l'état de fusion du talus 30 et/ en particulier en fonction de la hauteur h du talus 30. Une telle forme de réalisation est particulièrement flexible et efficace et peut s'adapter à des changements de la composition ou structure (granulométrie) de la charge et/ou du niveau de productivité recherché du four. Une telle forme de réalisation est aussi particulièrement utile pour les procédés discontinus et semi-continus qui présentent de facto la caractéristique que la hauteur du ou des tas 30 varie pendant la fusion des infondus.

Dans certains cas, la position, la hauteur h, voire la forme du tas 30 dans le four, et leur évolution éventuelle pendant le procédé de fusion sont connus par l'opérateur du four.

Toutefois, il est généralement souhaitable de pouvoir détecter une ou plusieurs de ces caractéristiques car ce sont des caractéristiques permettant d'optimiser le procédé de fusion.

Suivant une forme de réalisation avantageuse, des faisceaux électromagnétiques, et notamment des faisceaux laser, sont utilisés pour détecter la position du tas 30, la hauteur h du tas 30, la surface libre 40 ou d'une ou plusieurs des zones d'impact 41, 42, 43 pendant le procédé de fusion.

Suivant la forme de réalisation illustrée, deux faisceaux électromagnétiques 61, 62 sont dirigés d'une paroi latérale vers des détecteurs dans la paroi latérale 13 opposée.

Quand le talus 30 d'infondus se trouve en face d'un de ces faisceaux 61, 62, le talus 30 coupe ce faisceau laser 61, 62 et aucun signal est détecté par le détecteur correspondant. Quand le talus 30 ne coupe pas le faisceau laser 61, 62, le détecteur correspondant détecte le faisceau 61, 62, ce qui signifie l'absence d'un tas d'infondus à cet endroit dans le four 10.

Un premier faisceau électromagnétique 62 est dirigé d'une paroi latérale à l'autre 13 à une position correspondant à une position d'avancement maximale prédéterminée de la surface libre 40 et donc du front de fusion du tas 30. Quand, dans un tel four de fusion 10, il y a un retard de fusion, le tas 30 d'infondus avance vers la sortie pour la charge fondue dans la paroi aval 12. Avec l'avancement du tas 30 vers la sortie du four, les zones d'impact 41, 42, 43 sur la surface libre 40 du tas 30 se rapprochent de la racine de la flamme impactante correspondante 51, 52, 53/du brûleur 55 générant cette flamme impactante 51, 52, 53. Quand le tas 30 coupe le faisceau électromagnétique 62 (comme illustré dans la figure où le tas coupe le faisceau 62 au niveau de la zone d'impact 42), un signal est transmis à une unité de contrôle 65 du four 10 afin de signaler l'état d'avancement du tas 30. En réponse, l'unité de contrôle 65 transmet un signal de contrôle à l'unité de régulation 66 du ou des brûleurs 55 de manière à ce que la puissance globale des flammes impactantes 51, 52, 53 est augmentée tout en répartissant la puissance des flammes individuelles 51, 52, 53 de manière à ne pas déstabiliser l'intégrité structurelle du tas 30 au niveau de sa surface libre 40 et de risquer son effondrement incontrôlé.

Egalement suivant la forme de réalisation illustrée, un faisceau électromagnétique 61, tel qu'un faisceau laser, est dirigé d'une paroi latérale à l'autre 13, à une position, qui correspond à une position d'avancement minimale prédéterminé du tas 30 d'infondus vers la sortie du four 10 pour la charge fondu 50. Quand la surface libre 40 du tas 30 se trouve en amont de cette position d'avancement minimale, le faisceau électromagnétique 61, 62 n'est pas ou plus coupé par les infondus du tas 30 et le faisceau 61 impacte le détecteur correspondant dans la paroi latérale 13. Dans ce cas, un signal correspondant est transmis à l'unité de contrôle 65 du four 10, qui transmet à son tour un signal de contrôle à l'unité de contrôle 66 du ou des brûleurs 55 de manière à ce que la puissance globale des flammes impactantes 51, 52, 53 est réduite tout en répartissant la puissance des flammes impactantes 51, 52, 53 individuelles de manière à ne pas déstabiliser le talus 30 et de risquer son effondrement. Cette réduction de la puissance globale peut inclure l'extinction temporaire par l'unité de régulation 66 d'une ou plusieurs flammes impactantes 51, 52, 53.

Sur la base des signaux de détection obtenus, l'unité de contrôle 65 peut alors comparer la ou les distances détectées avec une position d'avancement maximale et/ou avec une position d'avancement minimale prédéterminées et transmettre à l'unité de contrôle 66 du ou des brûleurs 55 un signal de control pour la régulation de la puissance globale des flammes 51, 52, 53 comme décrit plus en détail ci-dessus.

Lesdits signaux de détection peuvent également être utilisé pour provoque un ajustement individuel, via une augmentation ou diminution, de l'impulsion et/ou de la puissance de la flamme impactante 51, 52, 53 dont la distance entre la racine de la flamme 51, 52, 53/la sortie du brûleur 55 correspondant et sa zone d'impact 41, 42 43 a été détectée. Par exemple, en fonction du signal de détection obtenu, l'unité de contrôle 65 peut transmettre à l'unité de régulation 66 du brûleur concerné un signal de contrôle pour l'ajustement de l'impulsion de la flamme 51, 52, 53 en question de manière à ce que cette flamme 51, 52, 53 impacte effectivement sa zone d'impact 41, 42, 43 sur la surface libre 40 sans qu'elle dégrade l'intégrité structurelle du tas 30.

Il est également possible de détecter la hauteur du tas 30.

Suivant une forme de réalisation, un faisceau électromagnétique est dirigé d'une paroi à une paroi opposée à une position à proximité du sommet du tas 30. Dans le cas où cette détection révèle que la partie supérieure du tas 30 visée par la détection est fondue et ne coupe donc plus le faisceau électromagnétique, un signal de détection est transmis à l'unité de contrôle 65, l'unité de contrôle 65 transmettant alors un signal de contrôle à l'unité de régulation 66 du ou des brûleurs 55 de manière à ce que la ou les flammes 51, 52, 53 ayant une direction α1, α2, α3 visant une zone d'impact 41, 42, 43 sur cette partie supérieure du tas 30 et qui n'impactent donc plus ou uniquement partiellement le tas 30 quand cette partie supérieure est fondue, sont éteintes, afin de maintenir une efficacité énergétique élevée du four 10 et de ne pas détériorer les parois ou d'autres éléments du four 10 (comme par exemple l'enfoumeuse, du fait d'être impactés par cette ou ces flammes.

Suivant une forme de réalisation avancée, la position et le profil/la forme du tas 30 à l'intérieur du four 10 sont détectés, par exemple par des moyens optiques (en anglais « optical imaging »), et la puissance des flammes impactantes est régulée en conséquence comme décrit ci-dessus.

Il est possible de détecter et de remédier à une fusion locale trop avancée ou pas assez avancée dans une ou plusieurs zones d'impact 41, 42, 43 sur la surface libre 40, voire de remédier à un effondrement localisé de la surface libre 40, en ajustant individuellement la puissance d'une seule ou de plusieurs flammes impactantes 51, 52, 53 dirigées spécifiquement vers ces zones d'impact 41, 42, 43 sur la surface libre du tas 30, sans nécessairement changer le transfert de chaleur par des flammes impactantes 51, 52, 53 vers autres zones 41, 42, 43 sur la surface libre 40 du tas 30.

## Revendications

1. Procédé de fusion dans lequel :
• des infondus sont introduits dans un four (10) par une ou plusieurs enfourneuses (20) ;
• dans le four (10), les infondus forment un tas (30) présentant une surface libre (40) inclinée par rapport à la verticale ;
• les infondus dans le tas (20) sont chauffés au moyen de flammes (51, 52, 53) dirigées vers la surface libre (40), chaque flamme (51, 52, 53) définissant une zone d'impact (41, 42, 43) sur la surface libre (40) du tas (30) ;
**caractérisé en ce que** :
• les flammes (51, 52, 53) sont dirigées vers la surface libre (40) suivant au moins deux directions (α1, α2, α3) formant des angles aigus (θ1, θ2, θ3) différents avec le plan horizontal de manière à ce que les zones d'impact (41, 42, 43) définies par les flammes (51, 52, 53) sur la surface libre (40) se situent à au moins deux niveaux verticaux (h1, h2, h3) différents ; et
• l'énergie thermique transférée au tas (30) par chaque flamme (51, 52, 53) dans sa zone d'impact respective (41, 42, 43) est régulée en régulant la puissance de la flamme (51, 52, 53) ;
• l'impulsion de chaque flamme (51, 52, 53) est régulée de manière à ce que la flamme (51, 52, 53) impacte la surface libre (40) dans sa zone d'impact (41, 42, 43) sans dégradation mécanique par la flamme (51, 52, 53) de l'intégrité structurelle du tas (30) dans cette zone d'impact (41, 42, 43).

2. Procédé suivant la revendication 1, les zones d'impact des flammes sur la surface libre se situent à au moins trois niveaux verticaux différents.

3. Procédé suivant l'une des revendications précédentes, dans lequel les zones d'impact à au moins deux niveaux verticaux différents ont les centres géométriques se trouvent dans un même plan vertical.

4. Procédé suivant l'une quelconque des revendications précédentes, dans lesquels chaque zone d'impact recouvre partiellement la zone d'impact la plus proche.

5. Procédé suivant l'une quelconque des revendications précédentes, dans lequel on détecte la hauteur du tas.

6. Procédé suivant l'une quelconque des revendications précédentes, dans lequel on éteint la ou les flammes dont la zone d'impact dépasse au moins en partie la hauteur h du tas (30).

7. Procédé suivant l'une quelconque des revendications précédentes, dans lequel on ajuste le nombre de niveaux verticaux différents des zones d'impact en fonction de la hauteur du tas.

8. Procédé suivant l'une quelconque des revendications précédentes, dans lequel on détecte une position de la surface libre, de préférence à au moins un des niveaux verticaux des zones d'impact.

9. Procédé suivant l'une quelconque des revendications précédentes, dans lequel on détecte si le tas atteint une distance d'avancement prédéfinie dans la direction d'au moins une des flammes dirigées vers la surface libre et dans lequel on augmente la puissance globale des flammes quand le tas atteint cette distance d'avancement prédéfinie.

10. Procédé suivant l'une quelconque des revendications précédentes, dans lequel on détecte la présence du tas à une distance de recul prédéfinie dans la direction d'au moins une des flammes dirigées vers la surface libre et dans lequel on réduit la puissance globale des flammes quand le tas n'atteint pas cette distance de recul prédéfinie.

11. Procédé suivant l'une quelconque des revendications précédentes, dans lequel le tas est en forme d'un talus ou d'une pile.

12. Procédé suivant l'une quelconque des revendications précédentes, dans lequel le four est équipé d'au moins un brûleur qui génère des flammes dirigées vers la surface libre suivant au moins deux directions formant des angles aigus différents avec le plan horizontal de manière à ce que les zones d'impact définies par ces flammes générées par ce brûleur sur la surface libre se situent à au moins deux niveaux verticaux différents.

13. Procédé suivant l'une quelconque des revendications précédentes, dans lequel le procédé est un procédé continu, discontinu ou semi-continu.

14. Procédé suivant l'une quelconque des revendications précédentes pour la fusion de verre, d'émail, de métal non-ferreux, de liant hydraulique ou pour la vitrification de déchets.
